# EUROPÄISCHE PATENTSCHRIFT

(11) **EP 0 806 993 B1**
(45) Veröffentlichungstag und Bekanntmachung des Hinweises auf die Patenterteilung: **12.12.2001**
(21) Anmeldenummer: 96901270.7
(22) Anmeldetag: 15.01.1996
(51) Int. Cl.: B05D 7/14

(54) **Verfahren zur Beschichtung von Innen-und Aussenflächen von Metallrohren mittels Pulverlacken**
Method of powder-coating inner and outer surfaces of metal pipes
PROCEDE DE REVETEMENT SOUS FORME DE PEINTURE PULVERULENTE POUR SURFACES INTERIEURES ET EXTERIEURES DE TUYAUX METALLIQUES

(30) Priorität: 03.02.1995 DE 19503431
(43) Veröffentlichungstag der Anmeldung: 19.11.1997
(73) Patentinhaber: BASF Coatings Aktiengesellschaft, 48165 Münster (DE)
(72) Erfinder: THOMAS, Dietmar, D-40724 Hilden (DE); REITER, Udo, D-48291 Telgte (DE); RADEMACHER, Josef, D-48165 Münster (DE)
(74) Vertreter: Fitzner, Uwe, Dr.
(86) Internationale Anmeldenummer: EP9600139
(87) Internationale Veröffentlichungsnummer: WO9623603

(56) Entgegenhaltungen:
- WO-A-93/24242
- FR-A- 1 174 583

## Beschreibung

Die vorliegende Erfindung betrifft ein Verfahren zur Beschichtung von Innen- und Außenflächen von Metallrohren für den Transport von Fluiden, insbesondere von hochaggressiven Gasen, mittels Pulverlacken.

Metallrohre werden weltweit für den Transport von Eröl, Erdölprodukten, Gas, Wasser sowie Feststoffen von der Fund- oder Produktionsstätte zum Verbraucher verwendet. Die Rohre müssen gegen Korrosion einerseits sowie gegen mechanische Einwirkungen andererseits geschützt sein, um die Betriebssicherheit der Leitungen über einen langen Zeitraum zu gewährleisten. Außenbeschichtungen von Metallrohren müssen eine hohe Schlag-, Druck- und Abriebfestigkeit aufweisen und es müssen Beschädigungen der Außenbeschichtungen beim Transport, bei der Lagerung, der Verlegung und beim Betrieb der Metallrohre verhindert werden.

Die Innenbeschichtungen von Metallrohren müssen darüber hinaus gegen die transportierten Fluide beständig sein, insbesondere wenn hochaggressive Stoffe transportiert werden. Außerdem müssen die Beschichtungen der Innenflächen glatt sein, damit möglichst geringe Reibungsverluste beim Transport der Medien auftreten.

Zum Schutz vor Korrosion werden Metallrohre heute üblicherweise mit reaktiven Pulverlacken beschichtet. Es ist bekannt, zu diesem Zweck Pulverlacke auf der Basis von Epoxidharzen und geeigneten Vernetzungsmitteln zu verwenden.

Zur Außenbeschichtung geeignete Pulverlacke sind beispielsweise bekannt aus der EP-B-104 719 und der US-PS 4122060. Bei den aus der EP-B-104 719 bekannten Pulverlacken handelt es sich um Epoxidharze, die beispielsweise mit phenolischen Härtern vernetzt werden. Die beschriebenen Pulverlacke enthalten weiterhin Katalysatoren sowie Calciumoxid als Füllstoff.

Die US-PS 4122060 beschreibt Pulverlacke auf Basis von Epoxidharzen, Härtern, Füllstoffen und Katalysatoren, wobei als Füllstoff bevorzugt amorphe Kieselsäuren eingesetzt werden. Des weiteren ist bekannt, als Füllstoffe in Epoxid-Pulverlacken zur Rohrbeschichtung Feld- und Schwerspate oder auch gefälltes Barriumsulfat einzusetzen. Pulverlacke zur Innenbeschichtung von Pipelines sind beispielsweise aus der JP-83/031110 bekannt. Hierbei handelt es sich um Epoxidharze, die außerdem die Hydrazide, Carboxylsäuren oder Phenole enthalten.

Die bisher bekannten Pulverlacke auf der Basis von Epoxidharzen, geeigneten Vernetzungsmitteln, Katalysatoren und Füllstoffen weisen den Nachteil auf, daß die hergestellten Innenbeschichtungen der Metallrohre schlechte Eigenschaften bezüglich der Glätte, Schlag- und Abriebfestigkeit aufweisen. Üblicherweise werden daher heute flüssige Epoxidharzsysteme für die Innenbeschichtung eingesetzt. Die bisher verwendeten Innenbeschichtungen weisen jedoch den Nachteil auf, den hohen erforderlichen Temperaturen für das Einbrennen der Außenbeschichtungen nicht standhalten zu können. Ein weiterer Nachteil ist, daß die Innenbeschichtungen eine zu hohe Schichtdicke, nämlich etwa 500 µm aufweisen.

Die vorliegende Erfindung hat sich nunmehr die Aufgabe gestellt, ein Verfahren zur Beschichtung von Innen- und Außenflächen von Metallrohren für den Transport von Fluiden, zur Verfügung zu stellen, das die beschriebenen Nachteile des Standes der Technik nicht mehr aufweist. Insbesondere sollen die Innenbeschichtungen auf der Pulverlackbasis den erhöhten Anforderungen an die Glätte und eine möglichst dünne Schichtdicke gerecht werden.
Die Aufgabe wird durch ein Verfahren gelöst, bei dem
a) der Pulverlack auf die Innenfläche des auf Schmelztemperatur des Epoxidharzpulvers erhitzten Rohres aufgebracht,
b) auf die Schmelztemperatur des Pulverlackes erhitzt,
c) das Rohr auf Einbrenntemperatur erhitzt und
d) auf der Außenfläche des Rohres Pulverlack aufgebracht wird.

Die Schmelztemperatur der im erfindungsgemäßen Verfahren einsetzbaren Pulverlacke liegt bei 80 bis 100°, vorzugsweise bei 70 bis 90°C. Als Einbrenntemperaturen werden 160 bis 250°C, vorzugsweise 180 bis 230°C verwendet.

Erfindungsgemäß einsetzbare Pulverlacke enthalten vorzugsweise Epoxidharze, phenolische Vernetzungsmittel, Katalysatoren, Hilfsstoffe sowie ggf. Hilfsmittel und pulvertypischen Additive, Rieselhilfen.

Geeignete Epoxidharze sind alle festen Epoxidharze mit einem Epoxiaquivalentgewicht zwischen 400 und 3.000,00 vorzugsweise 600 bis 2.000. Dabei handelt es sich hauptsächlich um Epoxidharze auf Basis von Bisphenol A und Bisphenol F. Besonders bevorzugt werden expoxidierte Novolackharze. Diese weisen vorzugsweise ein Epoxidäquivalentgewicht von 500 bis 1.000 auf.

Die Epoxidharze auf Basis von Bisphenol A und Bispehnol F weisen im allgemeinen eine Funktionalität von kleiner 2, die expoxidierten Novolackharze eine Funktionalität von größer 2 auf. Besonders bevorzugt werden in den im erfindungsgemäßen Verfahren einsetzbaren Pulverlacken epoxidierte Novolackharze mit einem mittleren Funktionalität im Bereich von 2,4 bis 2,8 und mit einem Epoxidäquivalentgewicht im Bereich von 600 bis 850. Bei den epoxidierten Novolackharzen sind die phenlischen Hydroxylgruppen mit Alkyl-, Acryl- oder ähnlichen Gruppen verethert. Durch Umsetzung der phenolischen Hydroxylgruppen mit Epichlorhydriden werden Epoxidgruppen in das Molekül eingebracht. Ausgehend von Novolacken bildet sich dabei der sog. Epoxid-Novolack. Die epoxidierten Novolacke sind strukturverwandt mit Bisphenol A-Harzen. Epoxidierte Novolackharze können hergestellt werden durch Epoxidierung von Novolacken, die z.B. aus 3 bis 4 Phenolkernen, welche über Methylenbrücken miteinander verbunden sind, bestehen. Als Novolackharze können auch alkylsubstituierte Phenole, welche mit Formaldehyd umgesetzt werden, verwendet werden.

Geeignete Epoxidharze sind beispielsweise die unter folgenden Namen im Handel erhältlichen Produkte:

Epikote 3003, 3004, 2017 der Firma Shell-Chemie, DER 640, 671, 662, 663U, 664, 667 der Firma Dow sowie Araldit GT 6063, 6064, 6084, 6097, 7004, 7220, 7225 der Firma Ciba Geigy.

Als epoxifunktionelles Bindemittel für die Pulverklarlacke sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist.

Epoxidgruppenhaltige Polyacrylatharze sind bekannt (vgl. z.B. EP-A-299 420, DE-B-22 14 650, DE-B-27 49 576, US-A-4, 091,048 und US-A-3, 781, 379).

Als Beispiele für die ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethyacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren, wie z.B. Acrylsäure und Methacrylsäure. Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2.500, vorzugsaeise 500 bis 1.500, besonders bevorzugt 600 bis 1.200, ein zahlenmittleres Molekulargewicht (gelpermeationschromatographisch unter Verwendung eines Polystyrolstandards bestimmt) von 1.000 bis 15.000, vorzugsweise von 1.200 bis 7.000, besonders bevorzugt von 1.500 bis 5.000 und eine Glasübergangstemperatur (T_{G}) von 30 bis 80, vorzugsweise von 40 bis 70, besonders bevorzugt von 50 bis 70°C auf (gemessen mit Hilfe der differential scanning calometrie (DSC)).

Das epoxidgruppenhaltige Polyacrylatharz kann nach allgemein gut bekannten Methoden durch radikalische Polymerisation hergestellt werden.

Als Härter für das epoxidgruppenhaltige Polyacrylatharz geeignet sind beispielsweise Polyanhydride von Polycarbonsäuren oder von Mischungen aus Polycarbonsäuren, insbesondere Polyanhydride von Dicarbonsäuren oder von Mischungen aus Dicarbonsäuren.

Derartige Polyanhydride sind herstellbar, indem der Polycarbonsäure bzw. der Mischung aus Polycarbonsäuren Wasser entzogen wird, wobei jeweils zwei Carboxylgruppen zu einer Anhydridgruppe umgesetzt werden. Derartige Herstellungsverfahren sind gut bekannt und brauchen daher nicht näher erläutert zu werden.

Zur Aushärtung der Epoxidharze enthält der im erfindungsgemäßen Verfahren einsetzbare Pulverlack phenolische oder aminische Härter. Zum Einsatz kommen können auch bicyclische Guanidine.

Dabei kann beispielsweise jedes beliebige Phenolharz verwendet werden, solange es die die für Reaktivität erforderliche Methylol-Funktionalität aufweist. Bevorzugte Phenolharze sind unter alkalischen Bedingungen hergestellte Reaktionsprodukte von Phenol, substuierten Phenolen und Bisphenol A mit Formaldehyd. Unter derartigen Bedingungen wird die Methylolgruppe entweder ortho- oder para-ständig mit dem aromatischen Ring verknüpft. Besonders bevorzugt werden gemäß der vorliegenden Erfindung als phenolische Vernetzungsmittel hydroxylgruppenhaltige Bisphenol-A- oder Bisphenol-F-Harze mit einem Hydroxyäquivalentgewicht im Bereich von 180 bis 600, besonders bevorzugt im Bereich von 180 bis 300, eingesetzt. Derartige phenolische Vernetzungsmittel werden hergestellt durch Umsetzung von Bisphenol-A oder Bisphenol-F mit glycidylgruppenhaltigen Komponenten, wie z.B. dem Diglycidylether von Bisphenol-A. Derartige phenolische Vernetzungsmittel sind beispielsweise erhältlich unter der Handelsbezeichnung DEH 81, DEH 82 und DEH 87 der Firma Dow DX 171 der Firma Shell-Chemie und XB 3082 der Firma Ciba Geigy.

Die Epoxidharze und die phenolischen Vernetzungsmittel werden dabei in einem derartigen Verhältnis eingesetzt, daß die Zahl der Epoxidgruppen zur Zahl der phenolischen OH-Gruppen in etwa 1 : 1 beträgt.

Die im erfindungsgemäßen Verfahren einsetzbaren Pulverlacke enthalten einen oder mehrere geeignete Katalysatoren für die Epoxidharz-Aushärtung. Geeignete Katalysatoren sind Phosphoniumsalze organischer oder anorganischer Säuren, Imidazol und Imidazolderivate, quartäre Ammoniumverbindungen sowie Amine. Die Katalysatoren werden im allgemeinen in Anteilen von 0,001 Gew.-% bis etwa 10 Gew.-%, bezogen auf das Gesamtgewicht des Epoxidharzes und des phenolischen Vernetzungsmittels, eingesetzt.

Beispiele für geeignete Phosphoniumsalz-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3, 477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Zum Teil enthalten handelsübliche phenolische Vernetzungsmittel bereits Katalysatoren für die Epoxidharz-Vernetzung.

Die im erfindungsgemäßen Verfahren einsetzbaren Pulverlacke enthalten 50 bis 90 %, vorzugsweise 60 bis 80 Gew.-% Bindemittel und 10 bis 50 Gew.-%, vorzugsweise 20 bis 40 Gew.-% Füllstoffe.

Als Füllstoffe kommen glycidylgruppenfunktionalisierte kristalline Kieselsäuremodifikationen in Betracht. Üblicherweise werden sie in dem genannten Bereich von 10 bis 50 Gew.-%, bezogen auf das Gesamtgewicht des Pulverlackes eingesetzt. In einigen Fällen sind jedoch auch Füllstoffanteile von mehr als 50 Gew.-% möglich.

Zu den kristallinen Kieselsäure-Modifikationen zählen Quarz, Cristobalit, Tridymit, Keatit, Stishovit, Melanophlogit, Coesit und faserige Kieselsäure. Die kristallinen Kieselsäure-Modifikationen sind glycidylgruppenfunktionalisiert, wobei die Glycidylgruppenfunktionalisierung durch eine Oberflächenbehandlung erzielt wird. Es handelt sich dabei beispielsweiose um Kieselsäure-Modifikationen auf der Basis von Quarz, Cristobalit und Quarzgut, die hergestellt werden durch Behandlung der kristallinen Kieselsäure-Modifikationen mit Epoxisilanen. Die glycidylgruppenfunktionalisierten Kieselsäure-Midifikationen sind auf dem Markt beispielsweise erhältnich unter der Bezeichnung Silbond^{R} 600 EST und Silbond^{R} 6000 EST (Hersteller: Quarzwerke GmbH) und werden hergestellt durch Umsetzung von kristallinen Kieselsäure-Modifikationen mit Epoxisilanen.

Vorteilhafterweise enthalten die im erfindungsgemäßen Verfahren einsetzbaren Pulverlacke 10 bis 40 Gew.-%, bezogen auf das Gesamtgewicht des Pulverlackes, an glycidylgrppenfunktionalisierten kristallinen Kieselsäuremodifikationen.

Die Pulverlacke können noch weitere anorganische Füllstoffe, beispielsweise Titanoxid, Bariumsulfat und Füllstoffe auf Silikatbasis, wie z.B. Talkum, Kaolin, Magnesium-, Aluminiumsilikate, Glimmer und ähnliche enthalten. Außerdem können die Pulverlacke ggf, noch Hilfsmittel und Additive enthalten. Beispiele hierfür sind Verlaufsmittel, Rieselhilfen und Entgasungsmittel, wie beispielsweise Benzoin.

Die Herstellung der Pulverlacke erfolgt nach bekannten Methoden (vgl. z.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben auf die gewünschte Korngrößenverteilung eingestellt.

Die im erfindungsgemäßen Verfahren einsetzbaren Pulverlacke werden elektrostatisch oder triboelektrostatisch auf die zuvor erhitzten Metallrohroberflächen aufgebracht. Es ist erfindungsgemäß aber auch möglich, die Pulverlacke zunächst auf das nicht erhitzte Rohr aufzubringen und erst dadurch auf die Schmelztemperatur des Pulverlackes zu erhitzen. Bei dem erfindungsgemäßen Verfahren wird die Metalloberfläche zunächst in üblicher Weise von Rost, Fett, Öl, Staub usw. gereinigt. Ggf. wird eine chemische Vorbehandlung (Chromatierung und/oder Phosphatisierung) durchgeführt.

Anschließend wird die Beschichtung der Innenflächen des Rohres vorgenommen. Hierzu wird das Rohr auf eine Schmelztemperatur von 60 bis 140°C, vorzugsweise 80 bis 100°C erhitzt. Bei diesen Temperaturen sintert der Pulverlack an, so daß es zu einer Haftung an der Innenfläche des Metallrohres kommt. Das Erhitzen kann entweder vor oder nach der Beaufschlagung mit dem Pulverlack erfolgen.

Die so beschichteten Innenflächen weisen eine ausreichende Haftung aus, so daß die Rohre vor der Weiterverarbeitung zwischengelagert werden können. Ebenso ist ein Transport zur Endverarbeitungsstätte möglich, d.h., es ist erfindungsgemäß nicht notwendig, die Außenbeschichtung sofort nach dem Aufsintern der Innenbeschichtung vorzunehmen.

Nach dem Aufsintern der Innenbeschichtung in der beschriebenen Weise wird die Außenschicht aufgetragen. Hierfür kommen die oben beschriebenen Epoxidharze vorzugsweise in Betracht.

Für die Beschichtung werden erfindungsgemäß vorzugsweise hohe Drücke verwendet. Die Applizierung kann hierbei elektrostatisch oder mittels Reibungsaufladung auf die heiße Rohraußenfläche erfolgen.

Die an den Innen- und Außenflächen beschichteten Metallrohre werden durch induktive Beheizung oder im Gasofen auf eine Beschichtungstemperatur von 160 bis 250°C, vorzugsweise 180 bis 230°C erwärmt, so daß Innen- und Außenbeschichtung zusammen eingebrannt werden.

Überraschenderweise kommt es bei diesem Einbrennen infolge der vorherigen Aufsinterung der Innenbeschichtung nicht zu deren Beeinträchtigung. Nach dem Stand der Technik war nämlich ein gleichzeitiges Einbrennen der Außen- und Innenbeschichtung nicht möglich, da letztere den hohen Einbrenntemperaturen nicht standhielt.

Erfindungsgemäß kann die Außenfläche der Metallrohre mit mehreren Schichten überdeckt werden. Möglich sind z.B. Metallrohrbeschichtungen auf der Basis der oben beschriebenen Epoxidharze und phenolischen Vernetzungsmittel. Die zweite Schicht besteht vorzugsweise in einem thermoplastischen Hartkleber und die dritte in einer polyolefin-Umwandlung.

Die zweite Schicht der Metallrohrbeschichtung, der thermoplastische Hartkleber, wird entweder im Extrusionsverfahren als Schmelze oder im Pulver-Auftragsverfahren auf die Pulverprimerschicht aufgetragen.

Geeignete Klebstoffe (Haftvermittler sind Copolymere, Pfropfcopolymere und Ionomere, welche Carboxyl- oder Anhydridgruppen oder Gruppen, die zu Carboxylgruppen hydrolisierbar sind, aufweisen. Geeignete Copolymere sind herstellbar durch Copolymerisation von Ethylen oder Propylen mit Â, β-ethylenisch ungesättigten Carbonsäuren, wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 Kohlenstoffatomen om Alkoholrest. Ebenfalls einsetzbar sind auch die entsprechenden Salze der aufgeführten Carbonsäuren. Geeignete Klebstoffe sind weiterhin Polymere, welche herstellbar sind, durch Pfropfung von mindestens einem Polymeren aus der Gruppe der Polyolefine mit bis zu 10 Gew.-%, bezogen auf das Gesamtgewicht der Monomeren, mindestens eines Monomeren aus der Gruppe der Â, ß-ethylenisch ungesättigten Carbonsäuren, deren Anhydriden, deren Estern oder Salzen in Gegenwart oder Abwesenheit von Peroxiden. Bewährte thermoplastische Hartkleber für die Metallrohrbeschichtung sind Copolymerisate aus Ethylen, (Meth)acrylsäureestern und (Meth)acrylsäure. Derartige Klebstoffe sind im Handel erhältlich unter der Bezeichnung Lucalen^{R} (Hersteller: BASF AG). Beispiele für geeignete Lucalen-Typen sind Lucalen A 2910 M, Lucalen A 2910 M Q 47, Lucalen A 3110 M und Lucalen A 3110 M Q 244. Die Auftragsstärke des thermoplastischen Hartklebers liegt üblicherweise im Bereich von 100 bis 500 µm, und die Substrattemperatur bei der Applikation des theroplastischen 220°C. Es ist darauf zu achten, daß zum Zeitpunkt der Applikation des Haftvermittlers die Epoxyharz-Pulverschicht noch nicht vollständig ausgehärtet ist, um einen festen Verbund herzustellen.

Die Metallrohrbeschichtungsmittel enthalten zur Ausbildung der dritten Schicht Polyolefin-Beschichtungsmittel , die auf den aufgeschmolzenen Kleber bei erhöhter Temperatur üblicherweise im Extrusionsverfahren aufgebracht werden. Geeignete Polyolefine sind Polyehtylen niedriger Dichte, mittlerer Dichte, hoher Dichte, Linear Low und Linear Very Low Sensity Polyethylen sowie Polypylone, deren Copolymere mit Ethylen und weiteren Monomeren sowie die Copolymeren des Ethylens und des Propylens mit einem oder mit mehreren Comonomeren aus der Gruppe der Vinylester, Vinylalkylether, der ungesättigten Mono- und Dicarbonsäuren, deren Salzen, Anhydriden und Estern. Besonders bevorzugt wird als Polyolefin-Beschichtungsmittel Ethylen-Homopolymerisat eingesetzt. Geeignete Polyethylene sind beispielsweise erhältlich unter der Handelsbezeichnung Lupolen^{R} (Hersteller: BASF AG). Beispiele für geeignete Lupolene sind Lipolen 2441 D, Lupolen 2452 D, Lupolen 3821 D und Lupolen 3652 D(BASF AG).

Die Auftragsstärken für die Innenbeschichtung liegen erfindungsgemäß unter 250 µm, vorzugsweise unter 150 µm. Die Auftragsstärken des Pulverlacks für die Außenbeschichtung liegen im Bereich von 100 bis 1.000 µm, vorzugsweise von 300 bis 500 µm. Es ist erfindungsgemäß überraschend, daß durch die oben beschriebene Art der Beschichtung von Metallrohren besonders dünne Innenbeschichtungen erzielbar sind. Diese weisen eine hohe Schlag-, Druck- und Abriebfestigkeit auf. Nach dem bisherigen Stand der Technik war es nicht möglich, dieses Ziel zu erreichen. Insbesondere die Glätte der Innenfläche weist überraschend gute Werte auf, denn die hohen Einbrenntemperaturen für die Außenlacke führten zu Schäden an den Innenbeschichtungen. Durch die erfindungsgemäße gestaffelte Verfahrensweise konnte dieser Nachteil vermieden werden. Bei dem Transport von Fluiden kommt es daher zu einer signifikaten Verringerung der Reibungsverluste.

Die erfindungsgemäßen Innenbeschichtungen eignen sind demzufolge insbesondere für die Anwendung in Rohren, die dem Transport hochaggressiver Fluide, insbesondere Gase dienen. Ein weiterer erfindungswesentlicher Vorteil ist, daß die Innenbeschichtung fabrikseitig vorgenommen und das Aufbringen der Außenschicht durch den Abnehmer erfolgen kann. Durch die Sinterung der Pulverlacke auf den Innenflächen der Rohre wird nämlich eine ausreichend stabile Haftung erreicht, so daß die Rohre zwischengelagert und transportiert werden können. Es ist demzufolge ohne weiteres möglich, erst später im Bedarfsfalle die Beschichtung der Außenflächen vorzunehmen. Beschädigungen der Außenummantelung beim Transport können daher auf diese Weise vermieden werden.

Im folgenden wird die Erfindung unter Bezugnahme auf die Beispiele näher beschrieben.

### Beispiele

Es wurden entsprechend dem erfindungsgemäßen Verfahren verschiedene beschichtete Proben angefertigt (alle Schichtdicken 70 bis 90 µm auf gestrahltem Untergrund), die nach der Prüfvorschrift "Internal Coating of Line Pipe for Non-Corrosive Gas Transmission Service, Appendix 5 und 6" geprüft werden sollten. Es wurde der Gas Blistering Laboratory Test und der Hydraulic Blistering Laboratory Test unter folgenden Prüfbedingungen durchgeführt:
a) Gas Blistering in trockenem Stickstoff bei 83 bar, Raumtemperatur, 24 h Einwirkzeit, schnelle Gasentspannung, sofortige Berurteilung der Probenoberfläche nach Ausbau.
b) Hydraulic Blistering Test in gesättigter Kalziumkarbonatlösung unter 16,5 bar Stickstoff, Raumtemperatur, 24 h Einwirkzeit, schnelle Entspannung, sofortige Beurteilung der Probenoberfläche nach Ausbau.

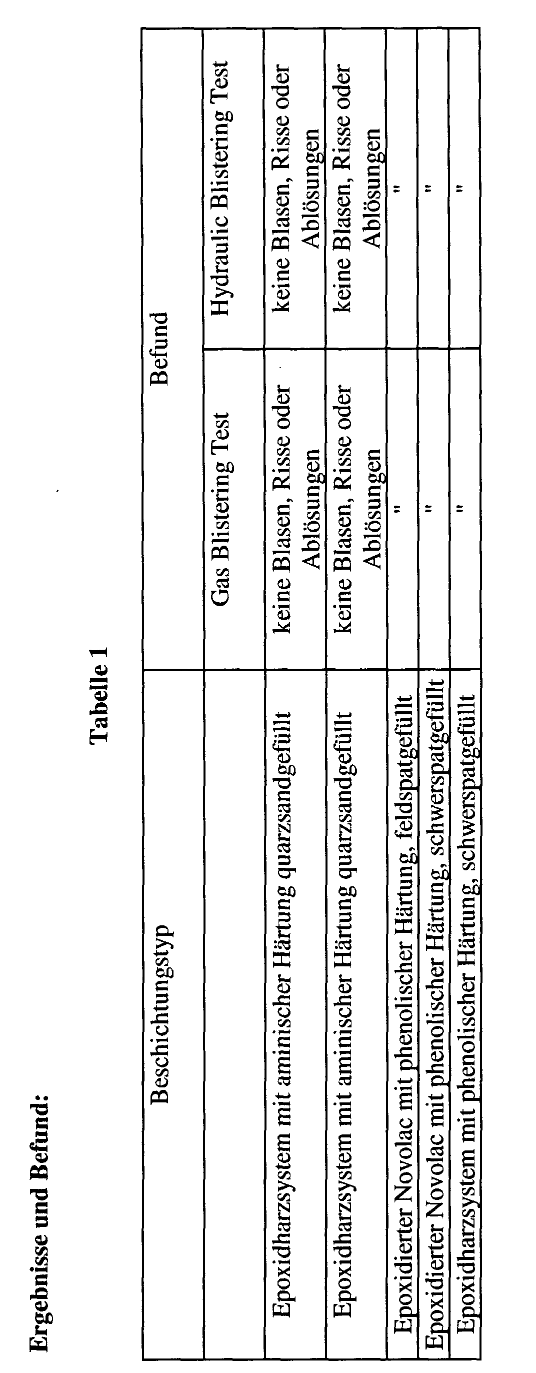

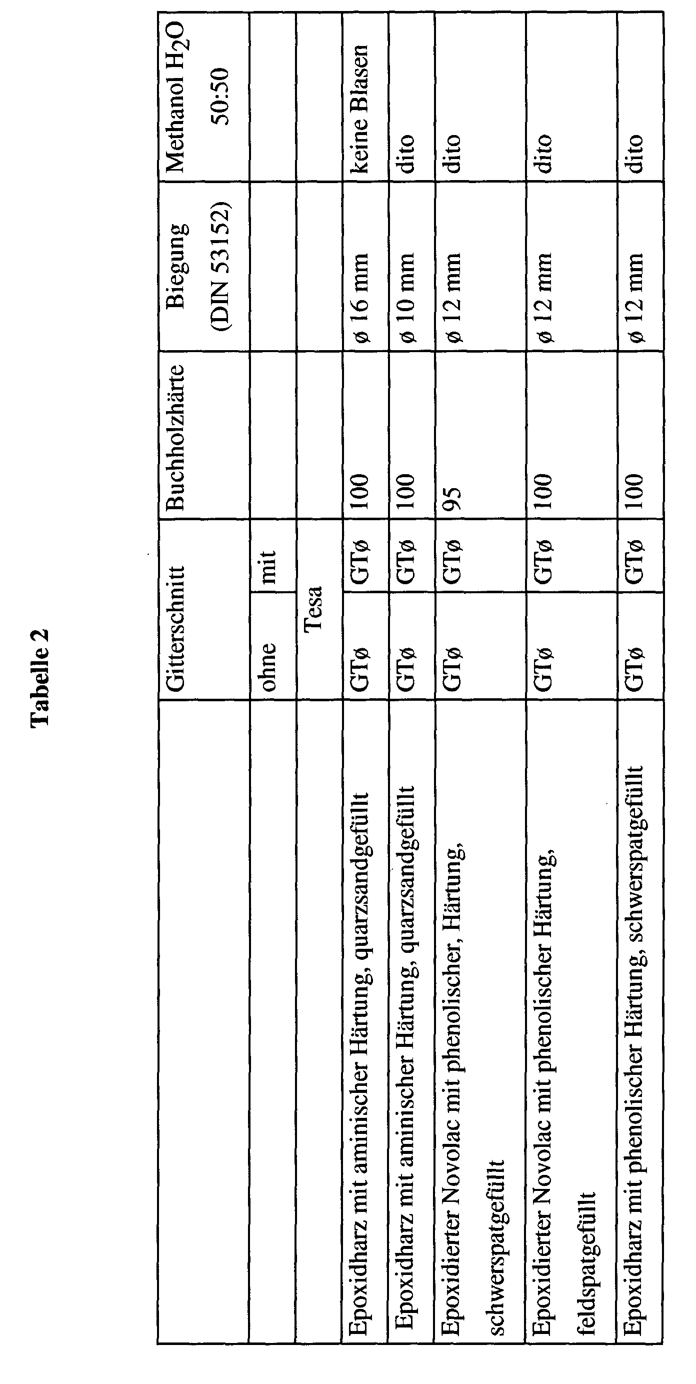

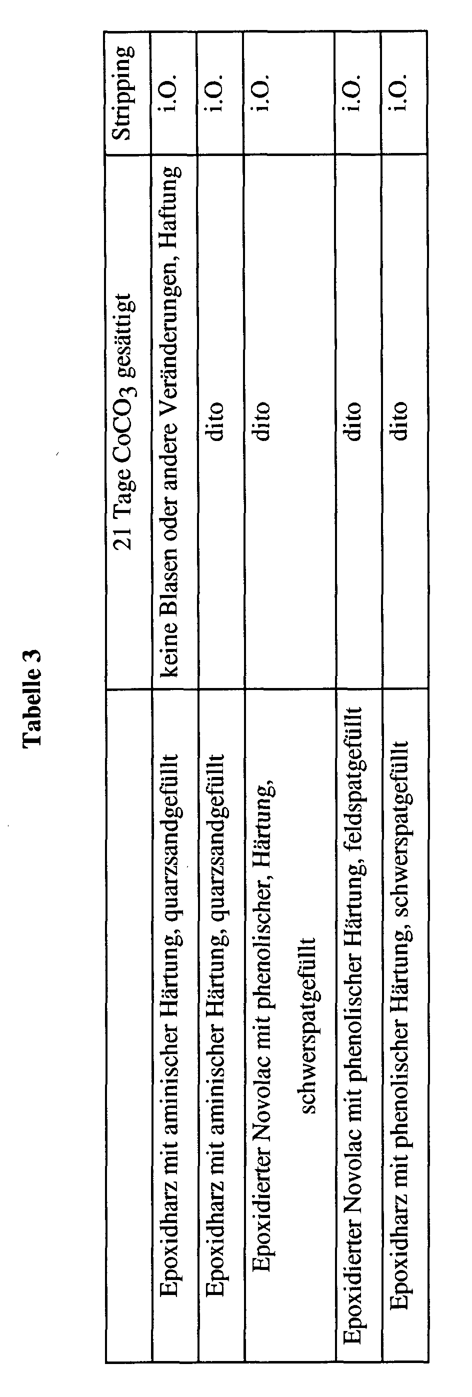

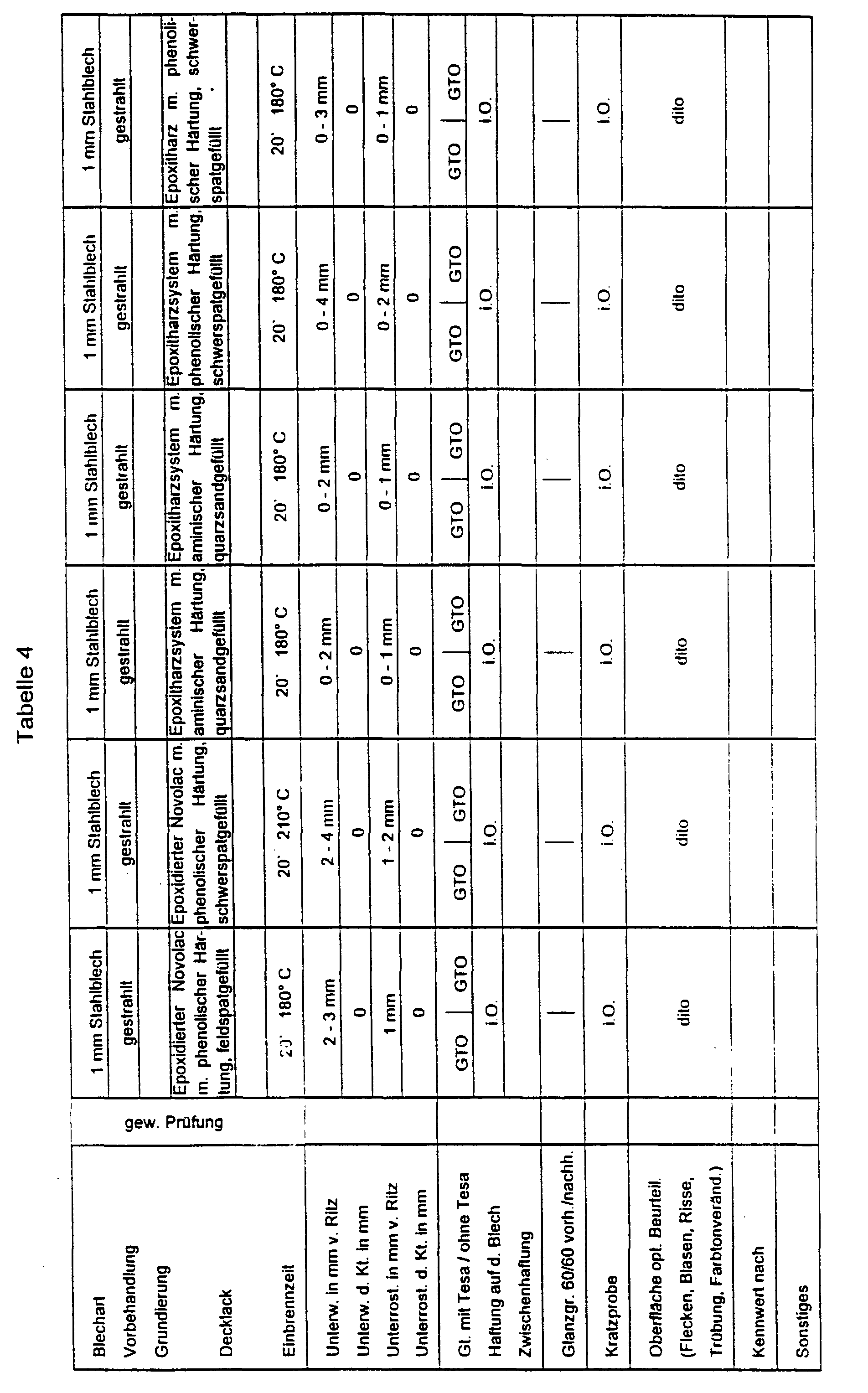

## Patentansprüche

1. Verfahren zur Beschichtung von Rohren mittels Pulverlacken,
**dadurch gekennzeichnet, daß**
a) der Pulverlack auf der Innenfläche des Rohres aufgebracht,
b) auf Schmelztemperatur erhitzt wird,
c) das Rohr auf Einbrenntemperatur erhitzt und
d) auf der Außenfläche Pulverlack aufgebracht wird.

2. Verfahren zur Beschichtung von Rohren mittels Pulverlacken nach Anspruch 1,
**dadurch gekennzeichnet, daß** auf eine Schmelztemperatur von 60 bis 140°C, vorzugsweise von 80 bis 100°C, und eine Einbrenntemperatur von 160 bis 250°C, vorzugsweise 180 bis 230°C erhitzt wird.

3. Verfahren nach einem der Ansprüche 1 oder 2,
**dadurch gekennzeichnet, daß** der Pulverlack aus Epoxidharzen, vorzugsweise epoxidierten Novolackharzen, Vernetzungsmitteln, vorzugsweise phenolischen oder aminischen Härtern oder bicyclischen Guanidinen, Katalysatoren, Füllstoffen sowie ggf. Hilfsmitteln und Additiven besteht.

4. Verfahren nach einem der Ansprüche 1 bis 3,
**dadurch gekennzeichnet, daß** der Pulverlack 50 bis 90 Gew.-%, vorzugsweise 60 bis 80 Gew.-% Bindemittel und 10 bis 50 Gew.-%, vorzugsweise 10 bis 40 Gew.-% Füllstoffe und ggf. Additive, wie Verlaufsmittel, Entgasungsmittel, Katalysatoren, Rieselhilfen enthält.

5. Verfahren nach einem der Ansprüche 1 bis 4,
**dadurch gekennzeichnet, daß** die Schichtdicke weniger als 250 µm, vorzugsweise weniger als 150 µm beträgt.

6. Verfahren nach einem der Ansprüche 4 oder 5,
**dadurch gekennzeichnet, daß** der Pulverlack für die Innenbeschichtung unter Druck aufgebracht wird.

## Claims

1. Process for coating pipes by means of powder coatings, **characterized in that**
a) the powder coating is applied to the interior surface of the pipe,
b) is heated to melting temperature,
c) heats the pipe to baking temperature, and
d) powder coating is applied to the outer surface of the pipe.

2. Process for coating pipes by means of powder coatings according to Claim 1, **characterized in that** heating is carried out to a melting temperature of from 60 to 140, preferably from 80 to 100°C and a baking temperature of from 160 to 250°C, preferably from 180 to 230°C.

3. Process according to either of Claims 1 and 2, **characterized in that** the powder coating consists of epoxy resins, preferably epoxidized novolack resins, crosslinking agents, preferably phenolic or aminic hardeners or bicyclic guanidines, catalysts, fillers and, if desired, auxiliaries and additives.

4. Process according to any of Claims 1 to 3, **characterized in that** the powder coating comprises from 50 to 90% by weight, preferably from 60 to 80% by weight of binder and from 10 to 50% by weight, preferably from 10 to 40% by weight, of fillers and, if desired, additives, such as leveling agents, devolatilizing agents, catalysts, flow aids.

5. Process according to any of Claims 1 to 4, **characterized in that** the coat thickness is less

6. Process according to either of claims 4 and 5, wherein the powder coating for the interior coat is applied under pressure.

## Revendications

1. Procédé de revêtement de tubes au moyen de vernis en poudre, **caractérisé en ce que**
a) le vernis en poudre est appliqué sur la surface intérieure du tube,
b) il est chauffé à température de fusion,
c) le tube est chauffé jusqu'à température de cuisson, et
d) un vernis en poudre est appliqué sur la surface extérieure.

2. Procédé de revêtement de tubes au moyen de vernis en poudre selon la revendication 1,
**caractérisé en ce que** l'on chauffe à une température de fusion de 60 à 140° C, de préférence de 80 à 100° C, et à une température de cuisson de 160 à 260° C, de préférence de 180 à 230° C.

3. Procédé selon l'une des revendications 1 ou 2,
**caractérisé en ce que** le vernis en poudre est constitué de résines époxy, de préférence de résines novolac époxydées, d'agents de réticulation, de préférence des durcisseurs phénoliques ou aminiques ou des guanidines bicycliques, de catalyseurs, de charges ainsi qu'éventuellement d'agents auxiliaires et d'additifs.

4. Procédé selon l'une des revendications 1 à 3,
**caractérisé en ce que** le vernis en poudre contient de 50 à 90 % en poids, de préférence de 60 à 80 % en poids de liant, et de 10 à 50 % en poids, de préférence de 10 à 40 % en poids de charges et éventuellement d'additifs, par exemple des agents d'écoulement, des agents de dégazage, des catalyseurs et des auxiliaires de coulabilité.

5. Procédé selon l'une des revendications 1 à 4,
**caractérisé en ce que** l'épaisseur de couche est inférieure à 250 µm, et de préférence inférieure à 150 µm.

6. Procédé selon l'une des revendications 4 ou 5,
**caractérisé en ce que** le vernis en poudre pour le revêtement intérieur est appliqué sous pression.
